Europäisches Patentamt

European Patent Office

Office européen des brevets

(19)

(11) Veröffentlichungsnummer: **0 064 603**

**A2**

(12) **EUROPÄISCHE PATENTANMELDUNG**

(21) Anmeldenummer: **82102963.4**

(22) Anmeldetag: **07.04.82**

(51) Int. Cl.³: **B 23 K 9/02**

(30) Priorität: 05.05.81 DE 3117606

(43) Veröffentlichungstag der Anmeldung:
17.11.82 Patentblatt 82/46

(84) Benannte Vertragsstaaten:
FR GB IT SE

(71) Anmelder: MESSER GRIESHEIM GMBH
Patentabteilung Hanauer Landstrasse 330
D-6000 Frankfurt/Main 1(DE)

(72) Erfinder: Roeder, Georg
Am Hennsee 10
D-6000 Frankfurt am Main 61(DE)

(72) Erfinder: Sachs, Helmut
Gerh. Hauptmann Ring 202
D-6000 Frankfurt am Main 50(DE)

(54) Automatische, berührungslose Brennerführung auf Fugenmitte beim Schutzgas-Lichtbogen-Schweissen.

(57) Bei dieser Brennerführung wird der Lichtbogen (10) als Sensor zur automatisch, berührungslosen Brennerführung auf Fugenmitte benutzt, wobei die sich beim Schweißen über der Schweißfuge (11) ergebende Lichtintensitätsverteilung (14, 15) des Licht/Plasmabogens (10) als Steuer/Regelgröße für die Bewegung des Schweißbrenners (1) verwendet wird. Der sich durch die horizontale und vertikale Abweichung des Brennerverlaufs von der Schweißfuge (11) ergebende asymmetrische Lichtintensitätseinfall (16, 17, 18, 18a) steuert/ regelt die Brennernachführung.

Fig. 3

Fig. 4

EP 0 064 603 A2

**0064603**
Gr/Ha
4.1.1982

- 1 -

MESSER GRIESHEIM GMBH                                    TMG 1269

Kennwort: Lichtintensitätssteuerung

Erfinder: Röder, Sachs                                  Ordner: II

## Automatische, berührungslose Brennerführung auf Fugenmitte beim Schutzgas-Lichtbogen-Schweißen

Die Erfindung betrifft ein Verfahren zur Nahtverfolgung beim Lichtbogen-/Plasma-Schweißen. Mit diesem Oberbegriff wird auf bekannte Verfahren zur Nahtverfolgung bezug genommen, die teilweise verfahrensabhängig arbeiten, wie z.B. Systeme mit magnetischer Lichtbogenauslenkung oder mit mechanisch gependeltem Schweißbrenner zwecks Lichtbogenauslenkung oder Systeme, die verfahrensunabhängig arbeiten, wie Systeme mit Fotodiodenrastern (mit separater Lichtquelle) die in Schweißrichtung dem Schweißbrenner vorlaufend angeordnet sind, und den Fugenverlauf durch Lichtreflexionsmessung überwachen oder gar solche, die direkt die vorbereitete Fugenform mechanisch, also taktil abtasten.

Anzustreben ist eine Brennerführung, die dem Fugenverlauf an der aktuellen Schweißstelle entspricht, weshalb der Schweiß-

- 2 -

lichtbogen selbst, als Sensor, wünschenswert ist.

Grundsätzlich bleibt festzuhalten, daß beim voll(halb)-automatischen Schutzgaslichtbogenschweißen der tatsächliche Schweißnahtfugenverlauf nicht mit einem z.B. von einer numerisch gesteuerten Kreuzwagen-Führungsmaschine vorgegebenen Schweißnahtverlauf aufgrund der theoretischen Werkstückkontur übereinstimmt. Bedingt ist dies u.a. durch Teiletoleranzen, Hefttoleranzen usw. Um nun sicherzustellen, daß der gewünschte Schweißnahtverlauf mit dem aktuellen Schweißfugenverlauf zusammenfällt, sind Einrichtungen erforderlich, welche Fugenabweichungen gegenüber der Sollbahn der Schweißnaht erkennen können und entsprechend korrigierend eingreifen, z.B. mit Hilfe zusätzlicher, den Hauptachsen der Führungsmaschine überlagernd zugeordneter Bewegungsachsen. Für diese Brennerführung hat sich die (nicht korrekte) Bezeichnung "Sensor zur Nahtverfolgung" überwiegend eingeführt.

Aufgabe der vorliegenden Erfindung ist es, eine Einrichtung der eingangs genannten Art zu schaffen, mit der eine automatische, berührungslose Brennerführung auf Fugenmitte beim Schutzgas-Lichtbogen-Schweißen möglich ist. Diese Aufgabe wird erfindungsgemäß durch die kennzeichnenden Merkmale des Hauptanspruches gelöst.

Weitere vorteilhafte Ausgestaltungen der Erfindung sind in den Unteransprüchen und in der nachstehenden Beschreibung unter Bezugnahme auf die Zeichnungen angegeben.

Es veranschaulicht:

Fig. 1. eine schematische Darstelleung eines Schutzgasschweißbrenners mit symmetrischem Lichtbogen

Fig. 2 einen Schnitt längs der Linie A-A in Fig. 1

Fig. 3-4 einen Schutzgasschweißbrenner nach Fig. 1/2 mit symmetrischem Lichtintensitätseinfall

Fig. 5-6 einen Schutzgasschweißbrenner nach Fig. 1/2 mit asymmetrischen Lichtintensitätseinfall bei Fugenablage rechts

Fig. 7-8 einen Schutzgasschweißbrenner nach Fig. 1/2 mit asymmetrischem Lichtintensitätseinfall bei Fugenablage links.

Fig. 9 eine Brückenschaltung für horizontale und vertikale Schweißfugenablage

Fig. 10 eine Schaltung für eine vertikale Schweißfugenablage.

Fig. 11 eine perspektivische Darstellung einer Koordinatenführungsmaschine in Portalbauweise

Fig. 12 eine perspektivische Darstellung des Querwagens

Fig. 13 eine perspektivische Darstellung des Hub- und des Drehantriebes mit einer Überkreuz- zahnsegmentverstellung des Schweißbrenners.

Fig. 14 eine schematische Darstellung des Kühlsystems des Schweißbrenners

Fig. 15 eine schematische Darstellung der Drehachsendrehverstellung und der Achse des Schweißbrenners.

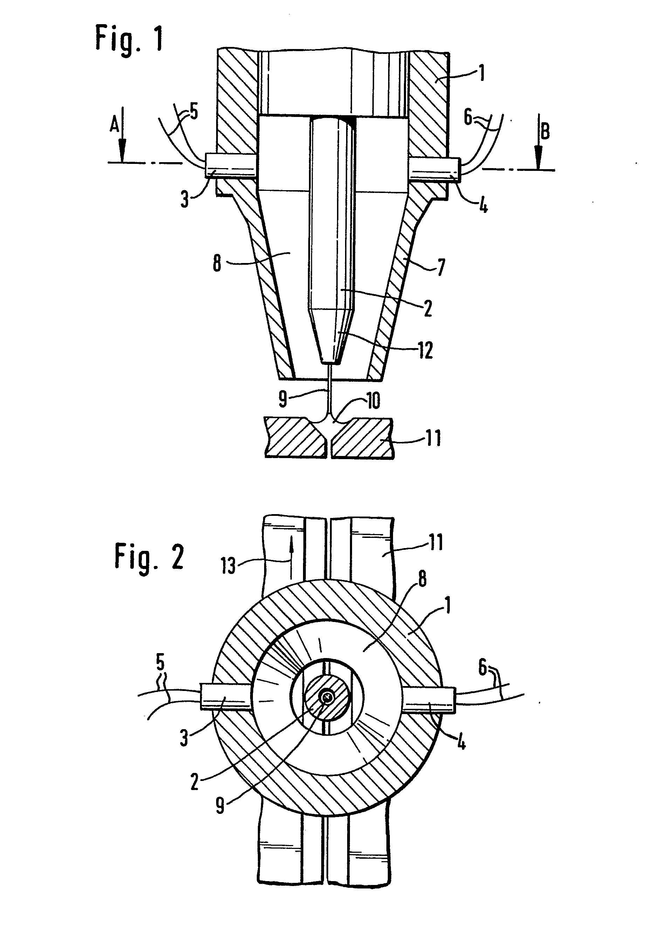

Die Einrichtung gemäß Fig. 1 und 2 benutzt den Lichtbogen 10 als Sensor, und zwar seine Lichtintensitätsverteilung.

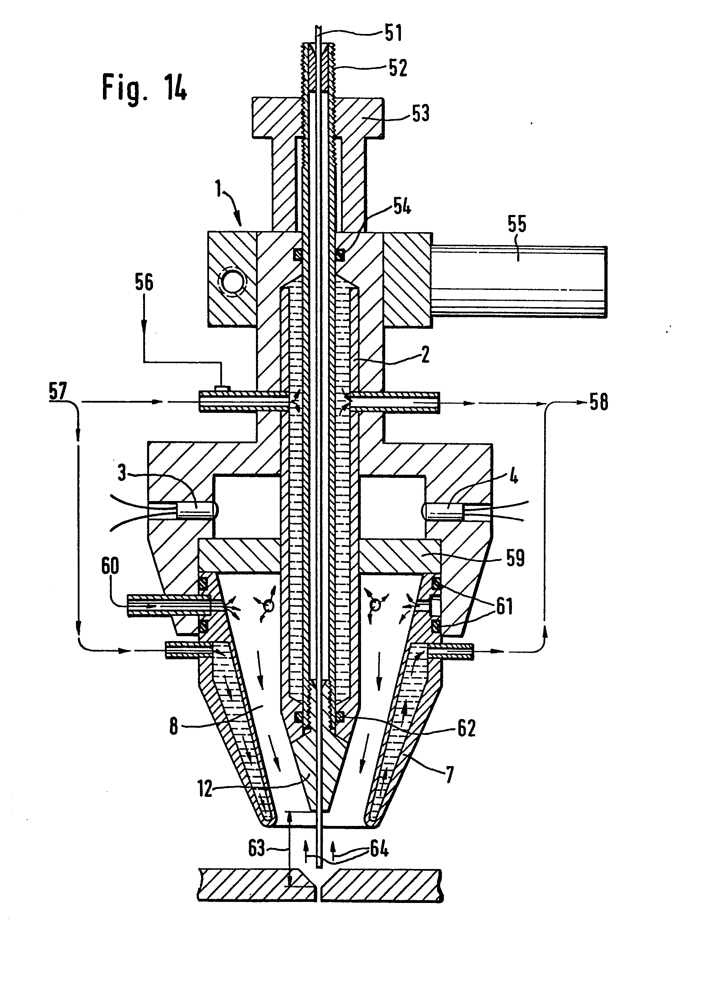

Um diese Lichtintensitätsverteilung zu messen, sind im Innern des Schweißbrenners 1, und zwar in dem Ringraum 8 zwischen Düsenstock 2 und in dessen Fortsetzung, in Richtung Schweißfuge, der Stromkontaktdüse 12, also in dem Ringraum 8, in dem auch das Schutzgas 60 (Fig. 14) eingeleitet wird, zwei, sich vorzugsweise diametral, gegenüberliegend angeordnete Optoelektronische-Bauelemente (OEB) 3,4 vorgesehen. Diese OEB 3,4 sind quer zur Schweißrichtung 13 platziert und "schauen" in den Ringraum 8 hinein. Am direkten "Sichtkontakt" zueinander sind sie durch Düsenstock 2 bzw. die Stromkontaktdüse 12 gehindert. Äußere Fremdlichtbeeinflussung ist während des Schweißvorganges nicht möglich. Düsenstock 2 bzw. Stromkontaktdüse 12 sind Bestandteil des Meßsystems "Sensor zur Nahtverfolgung.

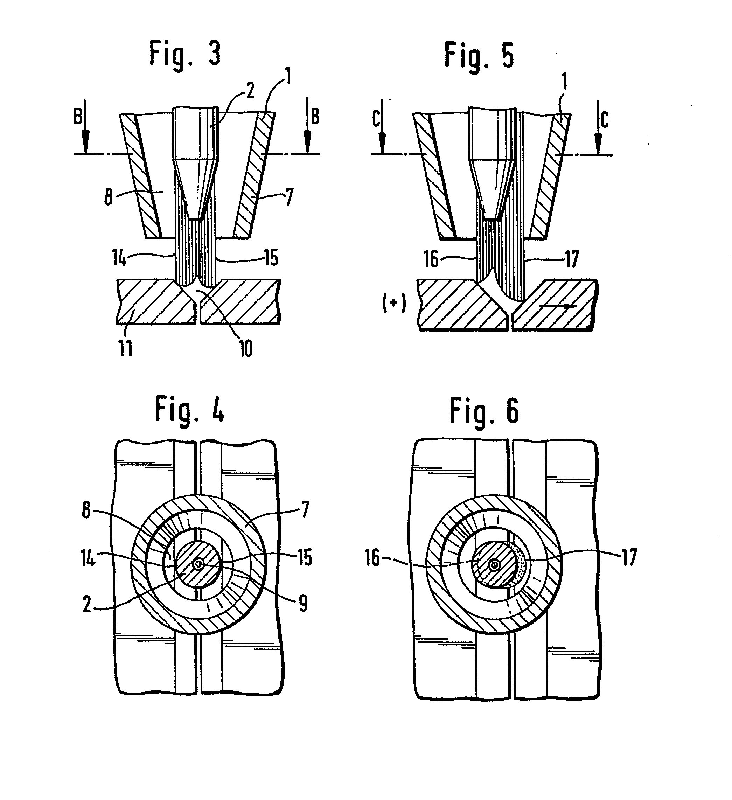

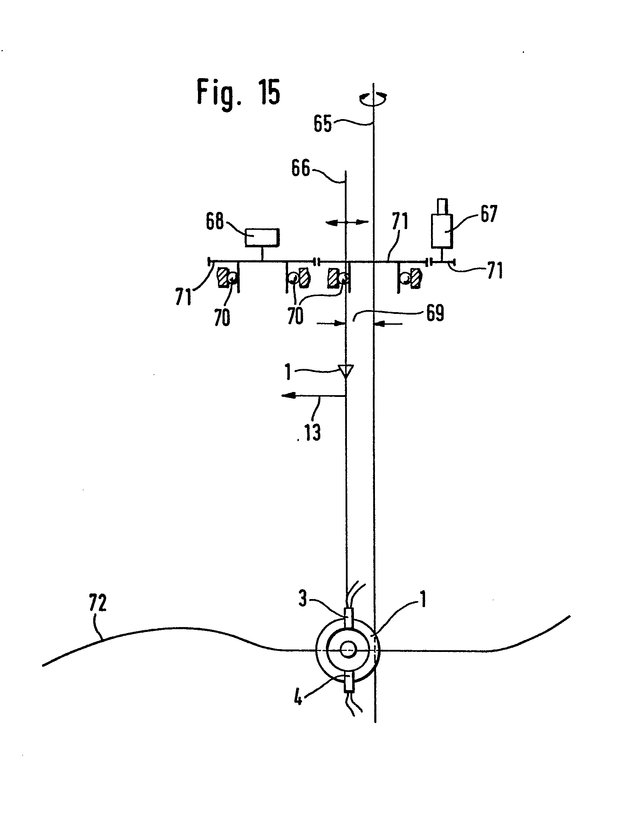

Sie "verteilen" je nach horizontaler Fugenablage gegenüber dem Sollverlauf quantitativ symmetrisch (Fig. 3,4) (Mittenlage 14, 15) oder seitenrichtig quantitativ asymmetrisch (Fig. 5, 6 und Fig. 7, 8)(horizontale Ablage 16,17,18,18a) die sich je nach horizontaler Position des Fugenverlaufs 72 (Fig. 15) zum Lichtbogen 10 einstellende Lichtintensitätszone. Eine Außermittigkeit der Lichtintensitätszone wird durch die horizontale Ablage der Fugenmitte gegenüber Mitte Schutzgasschweißbrenner 1 und somit gegenüber Mitte Schweißlichtbogen 10 und die als Folge hiervon sich ändernde Lichtbogenform verursacht (Affinität z.B. zur einseitig näher liegenden Fugenflanke einer Y-Naht). Dabei erfolgt ein asymmetrischer Lichtintensitätseinfall 16,18 mit einer Fugenablage rechts 17 bzw. einer Fugenablage links 18a.

Die eingangs erwähnte Situation, daß zwischen Soll- und Istbahn eine Lagedifferenz auftreten kann, erfordert eine horizontale Lagekorrektur. Es ist jedoch auch möglich, daß sich der Abstand Stromkontaktdüse/Werkstück 12/11 ändert. Auch diesem Umstand muß Rechnung getragen werden durch eine vertikale Lagekorrektur.

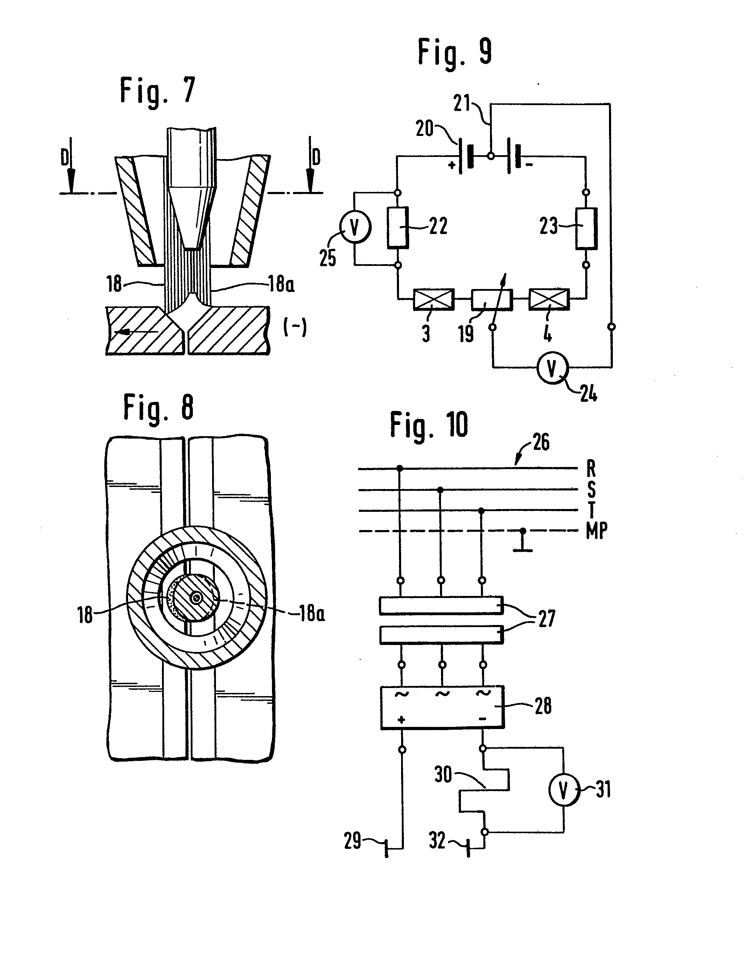

Zunächst soll jedoch die horizontale Lageabweichung und ihre Korrektur abgehandelt werden. Geht man beispielsweise von einer Y-Fugenvorbereitung aus und davon, daß der Abstand Stromkontaktdüse/Werkstück 12/11 konstant ist und die Stromkontaktdüse 12 und somit der Schweißdrahtaustritt 9 mittig zum Y stehen, registrieren die beiden OEB 3,4 gleichstarken Lichteinfall 14,15 (Fig 3,4) vom Licht des Schweißlichtbogens 10. Es bietet sich an, die OEB 3,4 mit den elektrischen Anschlüssen 5,6 in eine Brückenschaltung (Fig. 9) einzubringen und über ein Abgleichpotentiometer 19 und z.B. eine Gleichspannungsquelle 20 so zu betreiben, daß zwischen der elektrischen Mitte 21, der Gleichspannungsquelle 20 und dem Schleiferabgriff des Potentiometers 19 bei der geschilderten Situation Nullspannung am Messausgang 24,25 mit den Meßwiderständen 22,23 der Meßbrücke herrscht. Diese Brückenausgangsspannung (Messausgang 24,25) wird über eine Auswertelektronik einer motorisch betriebenen horizontalen Verstelleinheit zugeführt. Ist diese Spannung Null, erfolgt keine Reaktion des Motors und somit keine horizontale Lagekorrektur des Schweißbrenners 1 und somit des Lichtbogens 10. Wird der Schweißbrenner 1 z.B. mittels eines motorisch angetriebenen Brennerwagens 36 (an welchem die horizontale Verstelleinheit montiert ist) geradlinig beispielsweise entlang einer Y-Fuge weiterbewegt und weicht beispielsweise die Y-Fuge nach rechts von dieser geradlinig verlaufenden Sollbahn ab, beginnt der Lichtbogen 10 die linke Flanke der Y-Fuge hochlaufen zu wollen (Fig. 5,6). Dabei ändert sich aber die Form des Lichtbogens und zusammen mit Düsenstock 2 und Stromkontaktdüse 12 seine bisher symmetrische Lichtintensitätsverteilung 14,15 (Fig. 3,4). Die sich jetzt einstellende Asymmetrie der Lichtintensitätsverteilung 16,17 und 18,18a
entsprechend Fig. 5,6 und 7,8 bringt die Messbrücke seitenrichtig aus ihrer Nullbalance, da die OEB 3,4 entsprechende
Asymmetrie registrieren.

Der Verstellmotor der horizontalen Verstelleinheit dreht
nun so lange und verschiebt dabei den Schweißbrenner so
lange in Richtung zur gegenüberliegenden Flanke der Y-Fuge,
bis am Meßbrückenausgang wieder Nullspannung herrscht. Bei
Abweichung der Y-Fuge nach links erfolgt die gleiche Korrektur,
in ihrer Richtung aber umgekehrt.

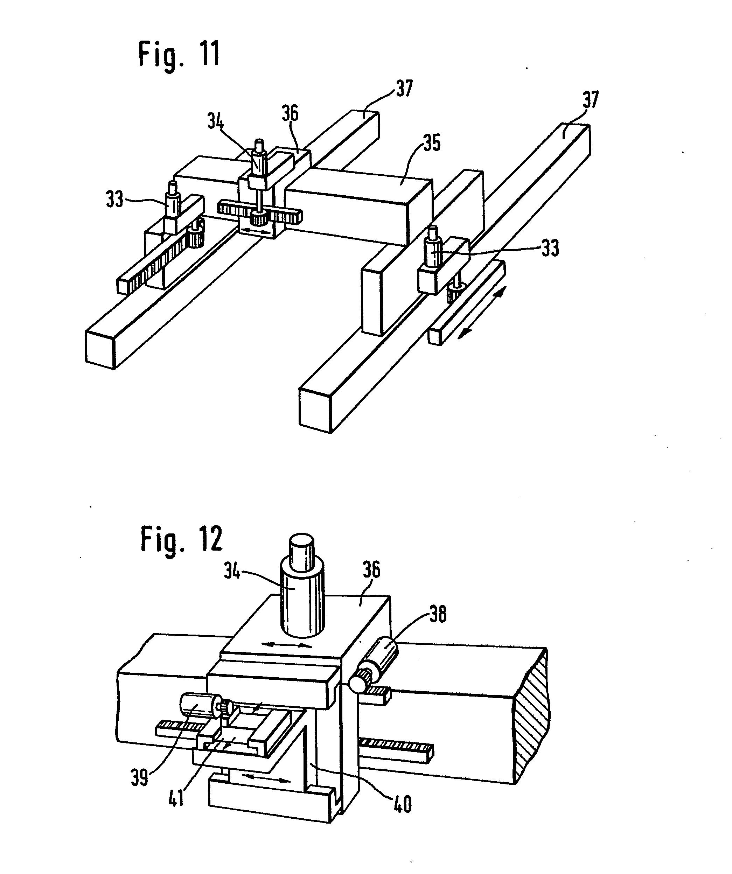

Der motorisch angetriebene Brennerwagen 36, an welchem
die horizontale Verstelleinheit mit Schweißbrenner montiert
ist, stellt die einfachste Form einer motorisch bewegten
Schweißeinrichtung für geradlinig verlaufende Schweißnähte dar, in der horizontalen Ebene. Zum Schweißen von
geschlossenen Konturumläufen an z.B. großflächigen Bauteilen
kommen statt dessen Schweißautomaten nach dem eingangs erwähnten Konstruktionsprinzip zum Einsatz.
Also Koordinatenführungsmaschinen (Fig. 11) in Portalbauweise zum Beispiel. Sie haben vorzugsweise ein- oder doppelseitigen Längsantrieb 33 über Ritzel und Zahnstange der den
Laufwagen 35 auf den Längslaufbahnen 37 antreibt. Einen
oder mehrere Querwagen 36, mit Querantrieb 34 über Ritzel
und Zahnstange. Jeder Querwagen 36 ist ausgestattet mit
einem Hilfskoordinaten-Verschiebesystem 38,39,40,41 um
Abweichungen der NC-Sollbahn zum wirklichen Fugenverlauf
korrigieren zu können. NC-Steuerung für die Sollbahn.

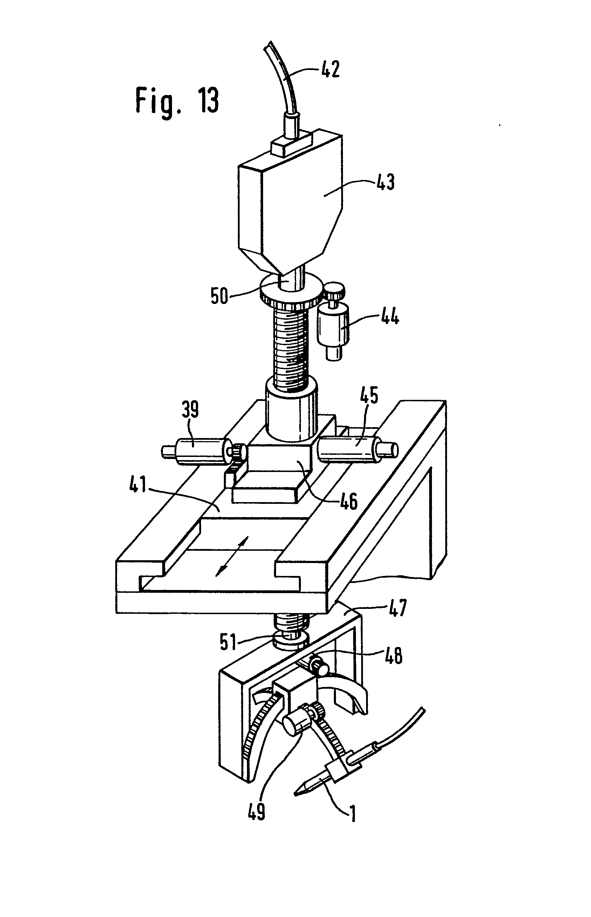

An dem Hilfskoordinaten-Verschiebesystem 38,39,40,41 ist
höhen und drehverstellbar (Fig 13) der Schutzgaslichtbogenschweißbrenner 1 montiert. Dabei gestattet eine über-kreuz
angeordnete Kreisbogensegmentverstellung 47,48,49, daß der
Schweißbrenner 1 in Schweißrichtung 13 (Fig. 1) über den Getriebemotor 48 stechend oder schleppend und bei Kehlnähten über den Getriebemotor 49 in Zwangslage auch z.B. bis 45° quer zur Schweißrichtung 13 angestellt werden kann. Wie erwähnt, gibt die NC-Steuerung die Sollbahn entlang der zu schweißen ist vor und dreht zusätzlich über die Hohlspindel-Drehverstellung 50 mit dem Drehantrieb 44 (sin-cos Geber) den Schweißbrenner 1 normal zur Bahn. Energie- und Drahtversorgung erfolgt durch die Energiezufuhr 42 und die Drahtspule 43, wobei der Schweißdraht 51 durch die Hohlspindel 50 dem Schutzgasschweißbrenner 1 zugeführt wird.

Die NC-Steuerung erkennt Abweichungen der Sollbahn gegenüber dem tatsächlichen Verlauf der vorbereiteten Schweißfuge nicht.

Der weiter vorstehend beschriebene Sensor übernimmt die Überwachung Soll- zu Istbahn. Die Abweichungen, die er feststellt, werden hier jedoch anders verarbeitet, als beim Einsatz mit dem nur geradlinig sich bewegenden motorisch angetriebenen Brennerwagen 36. Der Meßbrückenspannungsausgang wird einem sin-cos-Komponentenzerleger 44 zugeführt, der synchron mit der Drehverstellung 50 (NC gesteuert) gedreht wird (dessen um 90° versetzten beiden Abgreifer). Der Sin-cos-Komponentenzerleger 44,68 zerlegt das Meßsignal, ja nach seiner von der NC vorgegebenen Winkelposition, in zwei sin-cos-abhängige elektrische Richtungskomponenten für die Antriebe des Hilfskoordinaten-Verschiebesystem 38,39 40,41 das jeweils aus dem Antriebs-Hilfskoordinatensystem Quer 38, Längs 39 und dem Schlitten-Hilfskoordinatensystem Quer 40, Längs 41 besteht. Die sich jetzt einstellende resultierende Bewegungsrichtung des Schweißbrenners 1 erfolgt somit immer normal zur momentanen von der NC vorgegebenen Bewegungsrichtung. Sie findet dabei so lange statt, bis der Meßbrückenspannungsausgang 24,25 - durch den Sensor - wieder zu Null wird.

Zusammenfassend gesagt gibt also die NC-Steuerung die Sollbahn des Schweißbrenners 1 vor, während der Sensor den tatsächlichen Fugenverlauf erfaßt und mit Hilfe der zusätzlichen mechanischen Verstellmöglichkeiten (Hilfskoordinaten-Verschiebesystem 38,39,40,41) die Abweichung Sollbahn zu Fugenverlauf so korrigiert, daß die Schweißnaht mittig zum Fugenverlauf plaziert wird, z.B. bei der Y-Fuge.

Bis hierher ist der OEB-Sensor 3,4 (Optoelektronische-Bauelemente-Sensor), integriert in einem SGS (Schutzgasschweißbrenner 1) im Zusammenwirken mit einem motorisch angetriebenen Brennerwagen 36 oder mit einer Koordinaten-Führungsmaschine (Fig. 11) betrachtet worden. Im Falle des motorisch angetriebenen Brennerwagens 36 wird die Sollbahn durch eine Führungsschiene bei der Koordinaten-Führungsmaschine, (Fig. 11) NC gesteuert, durch den vom Programm her vorgegebenen Wegverlauf gesteuert. In beiden Fällen erfaßt der OEB-Sensor 3,4 die Abweichung des Schweißfugenverlaufs 72 (Fig. 15) von der vorgegebenen Sollbahn und steuert, gewissermaßen überlagernd zur Sollbahn den SGS 1 auf Fugenmitte, wie erläutert. Die OEB-SGS 3,4-1 Kombination gestattet jedoch auch die Nahtverfolgung dergestalt, daß die Weginformation z.B. für eine Koordinaten-Führungsmaschine (Fig. 11) direkt aus dem durch das Werkstück 11 selbst vorgegebenen Fugenverlauf gewonnen werden kann.

Der Basisaufbau eines solchen Systems sieht folgendermaßen aus:

1. Koordinaten-Führungsmaschine (Fig.11) mit Koordinaten-Antriebssystem für X- und Y-Bewegung. Karthesisch.

2. Brennerwagen 36 (X-Achse) mit vertikaler Verstelleinrichtung 44,50 (Z-Achse) an welcher die OEB-SGS 3,4-1 Kombination befestigt ist.

3. OEB-SGS 3,4-1 Kombination drehbar gelagert an der vertikalen Verstelleinrichtung 44,50. Die vertikale Verstelleinrichtung 44,50 besitzt einen Drehverstellmechanismus 44,50 Fig. 13,65,67,Fig.15.

4. Drehverstellmechanismus 44,50 Fig 13,65,67, Fig. 15 mit
zur Drehrichtung synchron sich drehendem sin-cos-
Komponentenzerleger 44 Fig. 13, Fig. 68 für die X-und
Y-Bewegungen der Koordinaten-Führungsmaschine Fig. 11.

5. OEB-SGS 3,4-1 Kombination in dem Drehverstellmechanismus
44,50 Fig. 13,65,67, Fig. 15 so gelagert, daß die Mitte
des OEB-SGS 3,4-1 in jeweiliger Fahrtrichtung der Koordinaten-Führungsmaschine (Fig. 11) gesehen, einen geringen,
bei Bedarf veränderbaren Vorlauf gegenüber der geometrischen
Drehachse des Drehverstellmechanismus 44,50 Fig. 13,65,67,
Fig. 15 aufweist.

6. Elektronische Einrichtung, die bei Fugenverfolgung und einer
sich einstellenden asymmetrischen Lichtintensitätsverteilung Fig. 5-8 ein Brückenungleichgewicht, wie weiter
vorstehend beschrieben, bewirkt. Diese Brückenasymmetrie
hat zur Folge, daß über eine weitere Elektronik der
Drehverstellmechanismus 44,50 Fig 13,65,67, Fig. 15 den
OEB-SGS 3,4-1 so lange dreht, bis Brückensymmetrie wieder
gegeben ist. Dabei stabilisiert der Vorlauf 69 des OEB-SGS
3,4-1 die Fahrtrichtung. Dadurch wird eine Fugenverfolgung
72 nach der hier vorgeschlagenen Methode erst funktionsfähig. Gleichzeitig stellt sich tangentiale Position des
OEB-SGS 3,4-1 zum Fugenverlauf 72 ein. Mit dem Drehen des
OEB-SGS 3,4-1 dreht synchron der X-Y-Komponentenzerleger
44,68. Seine Spannungswerte werden X-Y-Antriebsverstärkern
der Koordinaten-Führungsmaschine Fig. 11 zugeführt, welche
entsprechend dem trigonometrischen Pythagoras $\sin^2 + \cos^2$
$=1$ die Vorschubgeschwindigkeit (=Schweißgeschwindigkeit)
des OEB-SGS 3,4-1 in allen Bewegungsrichtungen, vorgegeben durch den Fugenverlauf, konstant hält.

Das so geschilderte System verzichtet also völlig auf eine NC-Steuerung und bei Bestückung einer Koordinaten-Führungsmaschine Fig. 11 z.B. mit nur einer OEB-SGS 3,4-1 Kombination auch auf zusätzliche mechanische Hilfsachsen wie weiter vorstehend bereits erläutert. Erst wenn 2 OEB-SGS 3,4-1 an einer Maschine 2 gleiche Schweißaufgaben synchron erfüllen sollen, muß der 2te oder jeder weitere OEB-SGS zusätzlich ein Hilfskoordinaten-Verschiebesystem 38,39,40,41 aufweisen zur überlagerten Lagekorrektur gegenüber der vom ersten OEB-SGS 3,4-1 vorgegebenen Bahn (durch den Fugenverlauf des ersten Bauteils). Die tangentiale Drehung zur Bahn (gemäß Fugenverlauf) für die zweite und jede weitere OEB-SGS 3,4-1 Kombination steuert der 2te und jeder weitere OEB-SGS 3,4-1 selbst. Das hat den Vorzug, daß die Normalposition jedes weiteren OEB-SGS 3,4-1 aktuell zu dem von ihm vorgefundenen Fugenverlauf 72 an "seinem" Werkstück erfolgt.

Nun zur vertikalen Lagekorrektur SGS 1/Werkstück 11. Annahme: Y-Fugenvorbereitung 11 SGS 1 mit Stromkontaktdüse 12 und mit bestimmten Abstand SGS 1/Werkstück 11 mittig über dem Y (Fig. 1). Werkstück 11 und SGS 1 sind über einen Schweißgleichrichter 28 und einen Transformator 27 an ein Drehstromnetz 26 angeschlossen. Dabei erfolgt zwischen dem Schweißgleichrichter 27 und dem Werkstückanschluß 32 ein Spannungsabfall über dem Shunt 30 , wobei der Spannungsabfall als Ausgangssignal für vertikale Schweißfugenablage dient. Ändert sich z.B. durch nicht korrekte vertikale Position ( stellt sich ein während des Schweißens) der zu verschweißenden Bauteile oder durch gewollte Werkstückgestaltung die Y-Fuge vertikal gegenüber der Sollhöhe 63 und ändert sich somit der Abstand Stromkontaktdüse 12/Werkstück 11, nimmt die Lichtintensität des Schweißlichtbogens 10 bezogen auf den Abstand Lichtbogen 10/OEB 3,4 mit dem Quadrat des Abstandes zu oder ab, je nachdem, ob der Abstand Stromkontaktdüse 12/Werkstück 11 kleiner oder größer wird. Das bedeutet, bei Verwendung von OEB 3,4 in Form von z.B.
Fotowiderständen, die in einer Meßbrücke Fig. 9 liegen,
daß sie entweder nieder- oder hochohmiger werden. Obwohl
die Ausgangssignalspannung der Meßbrücke dabei Null ist -
also keine horizontale Korrektur erfolgt - steigt oder fällt
der fließende Brückenstrom gegenüber dem Brückenstrom in
Sollposition des SGS 1.

Diese Brückenstromänderung gegenüber der Sollposition wird
über einen Shunt 30 (Fig. 10), einer elektronischen Auswerteinheit zugeführt, die einen elektromotorischen Stellantrieb
45,46 (Fig. 13) lagerichtig ansteuert und dadurch sicherstellt, daß immer vertikale Sollposition 63 SGS 1/Werkstück 11 gewährleistet ist.

Eine weitere Möglichkeit, die vertikale Lagekorrektur eines
SGS 1 mit Hilfe des Lichtbogens 10 durchzuführen besteht
darin, den bei vertikaler Ablage SGS 1/Werkstück 10 sich
ändernden Schweißstrom heranzuziehen. Die dabei vorzugsweise über einen Shunt 30 abgegriffene Spannung wird einer
elektronischen Auswerteinheit zugeführt und wie beschrieben
zur Lagekorrektur durch eine Verstelleinheit verarbeitet.

Das in der beschriebenen Form und für die genannten Zwecke
vorgeschlagene Optoelektronische-Sensor-System 3,4 hat den
Vorzug kontinuierlicher, analoger Meßwertbildung mit sofortiger,
direkter Verarbeitung bei denkbar geringstem Aufwand.
Das System als Kombination SGS 1/OEB 3,4 hat weiterhin
aufgrund seiner mechanischen Gestaltung und somit der Anordnung der OEB 3,4 im SGS 1 ein Verhaltensmuster, welches
selbstständig in der Reihenfolge : zuerst horizontale und
dann vertikale Lagekorrektur arbeitet.

Beispiel: Gepaarte Fotowiderstände oder Fotodioden mit
gleichen Kennlinienverlauf bezogen auf Widerstandsänderung über der Beleuchtungsstärke stören (gewollt) zwar die Balance der beschriebenen Meßbrücke bei horizontaler Ablage belassen aber den Brückenstrom konstant, da die Summe ihrer Widerstandswerte konstant bleibt, bei vertikaler Sollposition.

Da weiterhin der Lichtbogen 10, dessen Form und somit seine Lichtintensitätsverteilung bei horizontaler Ablage praktisch (fast) trägheitslos auch den geringsten Lageabweichungen folgt, steht theoretisch bereits bei Ablagen im µ-Meter-Bereich ein Meßwert zur Verfügung. Praktisch nutzbar wird diese Empfindlichkeit jedoch erst im Zehntel-Millimeter-Bereich. Etwa um den Faktor 10 bis 20 träger verhält sich dagegen die Meßbrücke bei Betrachtung von vertikalen Abweichungen und bei Verwendung des beschriebenen mechanischen Aufbaues der Kombination OEB/SGS 3,4-1. Die Ursache dafür liegt in der geringeren Ansprechempfindlichkeit der OEB's 3,4, und zwar weil bei vertikaler Ablage die Zu- oder Abnahme der Lichtintensität gemessen wird. Sie ändert sich mit dem Quadrat des Abstandes Lichtbogen 10/OEB 3,4. Bei der sehr hohen Beleuchtungsstärke des Lichtbogens 10 sind jedoch Höhenänderungen (Vertikalablage) im Millimeterbereich erforderlich, um eine Änderung der Lichtintensität (der Beleuchtungsstärke) durch ein OEB 3,4 zu erkennen.

Als Folge hieraus erhält man also automatisch immer zuerst die horizontale und danach die vertikale Lagekorrektur

Das OEB/SGS 3,4-1 System arbeitet in allen Bereichen des Schutzgas-Lichtbogens 10 und der zur Anwendung kommenden Drahtdicken 9. Also vom Kurzschluß bis zum Sprühlichtbogen. Es ist zum Einsatz für alle Fugen bzw. Nahtformen geeignet, mit Ausnahme von Stumpfnähten. Es arbeitet unter Verwendung aller bekannten Schutzgassorten. Ferner kann das OEB/SGS 3,4-1 - System bei anderen Schweiß- und Schneidverfahren beispielsweise UP-Schweißverfahren, Plasmaverfahren vorteilhaft verwendet werden.

Da durch das Schweißverfahren bedingt Metallspritzer 64 auftreten, die sich zum Beispiel an der Stirnseite der Schutzgaskappe 7 des Schweißbrenners 1, an der Stirnseite der Stromkontaktdüse 12, im Ringraum 8, zwischen beiden usw. festsetzen können, ist der Schutzgasschweißbrenner 1 konstruktiv so gestaltet, daß eine große Schweißnahtlänge in einem Zuge geschweißt werden kann, bis eine Reinigung der genannten kritischen Punkte erfolgen muß. Besonderes Gewicht ist dabei einer intensiven Flüssigkeitskühlung im Zwangsumlauf beigemessen worden, und zwar besonders der Schutzgaskappe 7 und der Stromkontaktdüse 12. Die Schutzgaskappe 7 ist doppelwandig gestaltet und das Kühlmedium gelangt über den Zulauf der Flüssigkeitskühlung 57 unmittelbar bis in die Stirnseite der Schutzgaskappe 7.

Die Stromkontaktdüse 12 wird mittels eines Rohrzugankers 52 (Fig. 14) in den konischen Sitz des Düsenstockes 2 gezogen, und zwar durch eine Gewindemutter 53, die sich am hinteren Ende des Schweißbrenners 1 befindet. Der Düsenstock 2 wird von der Kühlflüssigkeit durchflossen. Die Zufuhr erfolgt über den Zulauf der Flüssigkeitskühlung 57. An dem Zulauf der Flüssigkeitskühlung 57 erfolgt der Anschluß für den Schweißstrom 56. Der Rohrzuganker 52, der durch den Düsenstock 2 hindurchführt, bildet zusammen mit einer Bohrung im Düsenstock 2 den für das Kühlmittel erforderlichen Hohlraum. Dieser Hohlraum ist gegenüber des SGS und der Stromkontaktdüse 12 mittels O-Ringen 54,62 abgedichtet.

Im Innern des Rohrzugankers ist Raum für das Hindurchführen des Schweißdrahtes 9,51 in Richtung Stromkontaktdüse 12. Am vorderen Ende des Rohrzugankers 52 ist die eigentliche Stromkontaktdüse 12 aufgeschraubt, und zwar von Hand, ohne Werkzug. Sowohl der konische Sitz im Düsenstock 2 als auch der in die Stromkontaktdüse 12 eingeschraubte Rohrzuganker 52 sorgen für die erforderliche Wärmeabfuhr aus der Stromkontaktdüse 12 an das Kühlmittel. Der Rohrzuganker 52 ist ja, wie bereits erwähnt, von dem Kühlmittel umflossen.

Die so über den Zulauf der Flüssigkeitskühlung 57 und dem Rücklauf der Flüssigkeitskühlung 58 gekühlte Stromkontaktdüse und Schutzgaskappe 7 sorgen für eine intensive Abschrekkung der Metallspritzer 64 beim Auftreffen auf dieselben. Dadurch behalten die Metallspritzer 64 ihre äußere kugelige bzw. tropfenförmige Gestalt weitgehend bei und schaffen somit kaum Fläche für Adhäsionskräfte. Die Metallspritzer 64 können nicht mehr "festbacken".

Die sich dennoch ansetzenden haften mit so minimaler Kraft, daß mit Hilfe eines kräftigen Druckgasstoßes ihre Ablösung erreicht wird. Das Druckgas, das über die Schutzgas-Zufuhr 60 in den Ringraum 8 geleitet wird hat dabei seine Strömungsrichtung vom Inneren des SGS 1 her nach außen. Spiralförmig. Die Abdichtung gegenüber dem SGS erfolgt über die O-Ringe 61. Die Stromkontaktdüse 12 wird deshalb mit einem Rohrzuganker 52 in den Düsenstock 2 eingezogen, um zu verhindern, daß z.B. mit Steckschlüsseln oder bei entfernter Schutzgaskappe 7 mit Maulschlüsseln (beides die z.Zt. übliche Art der Düsenbefestigung) Kratzer an der blanken Oberfläche der Stromkontaktdüse 12 entstehen können, die eine Metallspritzeranhaftung fördern.

Die Stromkontaktdüse 12 hat Kegelform. Ihr Kegeldurchmesser nimmt in Richtung Düsenstock 2 zu. Der Übergang Stromkontaktdüse 12 zu Düsenstock 2 ist kontinuierlich. Ohne Absatz. Entsprechend keglig verläuft die innere Form der Schutzgasdüse 7. Teilweise auch die äußere Form. Die Schutzgasdüse 7 ist auf den SGS 1 aufsteckbar.

Unter Beibehaltung einer laminaren Schutzgasströmung mit ausreichend niedriger Strömungsgeschwindigkeit, um eine zuverlässige Schutzgasatmosphäre für das Schweißbad zu gewährleisten, wird durch die beschriebene innere geometrische Form des Schutzgasschweißbrenners 1 sichergestellt, daß weiter in das Innere des SGS 1 gelangende Metallspritzer ungehindert auf einen Prallring 59 treffen können. Er muß lichtdurchlässig sein. Der Prallring 59 hat eine Bohrung, aus welcher der Düsenstock 2 herausragt in Richtung Stromkontaktdüse 12.

Hinter dem Prallring 59, in Flugrichtung der metallischen Schweißspritzer 64 gesehen, sind die Optoelektronischen Bauelemente 3,4 angeordnet. Geschützt gegen den direkten Beschuß durch die Schweißspritzer.

Das Schutzgas tritt in den Gasringraum 8 des SGS 1 vor dem Prallring 59 ein, und zwar radial.

Durch den geschilderten konstruktiven SGS 1-Aufbau ist gewährleistet, daß die OBS's 3,4 weder durch Schweißspritzer noch durch Schweißrauche etc. verschmutzt werden.

Der lichtdurchlässige Prallring 59 läßt das Licht des Schweißlichtbogens 10 zu den OEB's 3,4 gelangen. Gedämpft. Er wirkt ähnlich einem Filter. Das ist aufgrund der hohen Lichtintensität des Schweißlichtbogens wünschenswert. Weiterhin sollte der Prallring 59 das Licht streuen. Das ist im Hinblick auf eventuelle Schweißrauchniederschläge und Brandspuren von Metallspritzern - diese Spritzer werden sich überwiegend selbst frei und haften nicht an. Sie hinterlassen aber kleine Brandspuren - erwünscht.

Die Streuung des Lichtes des Schweißlichtbogens 10 durch den Prallring 59 bewirkt nämlich, daß die Verschmutzung der Prallfläche durch die beiden genannten Verursacher allmählich und nicht abrupt geschieht. Zumindest von den OEB's 3,4 so wahrgenommen wird. Das hat zur Folge, daß die Lichtdurchlässigkeit des Prallringes 59 nur allmählich abnimmt und meßtechnisch gesehen die OEB-Meßbrücke nur allmählich hochohmiger wird.

Für die horizontale Lagekorrektur des SGS 1 ist das ohne Beeinträchtigung ihres Wirkmechanismus. Die vertikale Lagekorrektur würde aber irgendwann einmal den Schweißbrenner 1 zu dicht an die Fuge führen. Daher ist der Prallring als Verschleißteil zu behandeln, wie die Stromkontaktdüse. Austausch des Prallrings 59 gegen neuen zu den allgemeinen Wartungsintervallen am SGS 1 oder, je nach Einsatzdauer, in kürzeren oder längeren Zeitabständen.

TMG 1269
Gr/Ha
4.1.1982

Ansprüche

1. Verfahren zur Nahtverfolgung beim Lichtbogen-/Plasma-
Schweißen,
dadurch gekennzeichnet, daß die sich beim Schweißen
über der Schweißfuge (11) ergebende Lichtintensitätsverteilung (14,15,16,17,18,18a) des Licht/Plasmabogens (10)
als Steuer/Regelgröße für die Bewegung des Schweißbrenners (1)
verwendet wird.

2. Verfahren nach Anspruch 1 zur horizontalen Nahtverfolgung
beim Schutzgaslichtbogenschweißen,
dadurch gekennzeichnet, daß zur Nahtverfolgung zwei sich
diametral gegenüberstehende, in einen Ringraum (8) und zwar
in den Ringraum (8) zwischen Düsenstock (2) bzw. Stromkontaktdüse (12) und innerem Durchmesser der Schutzgaskappe (7), in wählbarem Abstand von der Schutzgaskappenvorderkante oder der Stromkontaktdüsen-Vorderkante -"hineinschauende" und durch den Düsenstock (2) bzw. die Stromkontaktdüse (12) am direkten "Sichtkontakt" zueinander
gehinderte auf Lichtintensitätsverteilung (14,15,16,17,18,18a)
des Schweißlichtbogens (10) ansprechende Optoelektronische-
Bauelemente (3,4) in einem Schutzgasschweißbrenner (1)
angeordnet sind, welche z.B. die durch horizontale
Lageabweichung (14 bis 18a) der aktuellen Schweißposition
des Schweißbrenners (1) gegenüber einer z.B. numerisch
vorgegebenen Sollposition (Sollbahn) in dem beschriebenen
Ringraum (8) sich ändernde Lichtintensitätsverteilung
(14 bis 18a)- bedingt durch die Lageänderung (14 bis 18a)
des Schweißlichtbogens (10) zur vorliegenden Mitte einer
Fugenform und die dadurch verursachte asymmetrische
Schweißlichtbogenform (16 bis 18a - analog kontinuierlich
und seitenzugeordnet (also ob Links- (18,18a) oder Rechtsablage (16,17)) erkennen und z.B. über eine elektronische
Brückenschaltung, in der sie liegen, die sich so einstellende Asymmetrie der Brücke und die somit auftretende Plus-
oder Minus-Ausgangsbrückenspannung entsprechend
der horizontalen Ablagerichtung, einer Auswertelektronik
zuleiten und über einen horizontalen Stellantrieb (34)
die horizontale Position des Schutzgasschweißbrenners (1)
so lange verändert, bis die Position desselben wieder
mittig zur Fugenform ist, wodurch die Symmetrie der
Lichtintensitätsverteilung (14,15) des Schweißlichtbogenlichtes (10) die Wiedererlangung der symmetrischen Form
des Schweißlichtbogens (10) und als Konsequenz hieraus die
Brückennullspannung wieder hergestellt werden.

3. Verfahren nach Anspruch 1 zur vertikalen Nahtverfolgung
beim Schutzgaslichtbogenschweißen,
dadurch gekennzeichnet, daß eine Anordnung von Opto-
elektronischen-Bauelementen (3,4) gemäß Anspruch 1 bei
vertikaler Abstandsänderung (63) Schweißsstromkontaktdüse (12)/Werkstück (11) - ausgehend von der mittigen
Position (14,15) des Schweißlichtbogens (10) zur Fugenform und dem Soll-Betriebsabstand (63) Kontaktdüse (12)/
Werkstück(11)und dem folglich dieser Sollpositionen entsprechend fließendem Brückenstrom (in der unter Anspruch 2
erwähnten Brückenschaltung), der den Bezugswert darstellen
soll - symmetrische Lichtintensitätsänderungen des Schweißlichtbogens (10) erkennen, die sich durch vertikale Abstandsänderungen einstellen und dadurch zur Größenänderung
des Brückenstromes    gegenüber dem Bezugsbrückenstrom bei Soll-Betriebsabstand (63) führen und daß
diese Brückenstromänderung - als Meßspannung (25) abgegriffen über einen Widerstand (22) einer Auswertelektronik
zugeführt wird,die einen vertikalen Stellenantrieb (45)
beaufschlagt und dadurch die vertikale Position des Schweißbrenners (1)und somit des Schweißlichtbogens (10) und dadurch dessen Lichtintensität (14 bis 18a)so lange ändert, bis der aktuell
fließende Brückenstrom auf den Bezugsbrückenstrom (bei Soll-Betriebsabstand) zurückgeführt worden ist, wie zu Schweißbeginn.

4. Verfahren gemäß einem der Ansprüche 1 bis 3, dadurch gekennzeichnet, daß die beiden sich diametral gegenüberstehenden Opto-elektronischen-Bauelemente (3,4) quer zur Schweißrichtung (13) in dem Schutzgas-Lichtbogenschweißbrenner (1) angeordnet sind.

5. Verfahren gemäß Anspruch 3, dadurch gekennzeichnet, daß bei vertikaler Abstandsänderung Schweißstromkontaktdüse (12)/Werkstück (11) gegenüber dem Soll-Betriebsabstand (63) die sich dadurch einstellende Schweißstromänderung gegenüber dem bei vertikaler Sollposition (63) des Schweißbrenners (10) fließendem Sollschweißstrom an einem Shunt (30) abgegriffen und in einer Brückenschaltung elektronisch so weiterverarbeitet wird, daß bei Abweichung von der Brückenbezugsspannung diese Spannungsänderung einer elektronischen Auswerteinheit zugeführt wird, die einen vertikalen Stellantrieb (45,46) so beaufschlagt, daß eine vertikale Korrektur des Schutzgasschweißbrenners (1) und damit des Schweißstromes so lange erfolgt, bis wieder der Sollschweißstrom fließt und dadurch die Brückensollspannung wieder herrscht (Brückenbezugsspannung).

6. Verfahren nach Anspruch 1, dadurch gekennzeichnet, daß eine Asymmetrie der optoelektronischen Meßbrücke (24) und die dadurch auftretende Plus- oder Minus-Ausgangsbrückenspannung einer Auswertelektronik zugeführt wird, die einen Drehverstellantrieb (67) für Links- oder Rechtsdrehung beaufschlagt der sowohl den Lichtbogen-Schutzgasschweißbrenner (1) um seine Mittenachse (66) und somit die Optoelektronischen-Bauelemente (3,4) normal zur aktuellen Bahnkontur (72) (Fugenverlauf) als auch synchron dazu einen sin-cos-Winkelgeber (68) dreht, der seinerseits die Koordinaten-antriebe einer z.B. Koordinaten-Führungsmaschine welche den Lichtbogen-Schutzgasschweißbrenner (1) entlang der durch das Werkstück (11) selbst vorgegebenen Schweißbahn (72) (Fugenverlauf) führen soll, beaufschlagt, so daß die Richtung der resultierenden Bewegung der Koordinatenantriebe (33,34,37,38,39,40,41,45,46) mit der vorgegebenen Schweißbahn (72) (Fugenverlauf) identisch ist, und daß somit letztlich der Schweißlichtbogen selbsttätig der als Führungsschablone dienenden und vorgegebenen und zu verschweißenden Fuge folgt, ohne Wegvorgabe durch z.B. eine numerische Bahnsteuerung.

7. Verfahren nach Anspruch 1,
dadurch gekennzeichnet, daß z.B. bei einer numerisch vorgegebenen Soll-Schweißbahn die Ausgangsbrückenspannung (24) bei herrschender Asymmetrie der Optoelektronischen Meßbrücke einem sin-cos-Winkelgeber (44) zugeführt wird, der von der NC-Steuerung - synchron mit dem Lichtbogen-Schutzgasschweißbrenner (1) - immer tangential zur Bahn (theoretischer Schweißfugenverlauf) gedreht wird und der dabei seine sin-cos-Ausgangssignale einer Hilfskoordinaten-Steuerung (38,39,40,41) mit Stellantrieben (38,39) zuführt, die ihrerseits eine rechtwinklig zur Ist-Schweißbahn (Ist-Fugenverlauf) verlaufende resultierende Zustellbewegung des Lichtbogen-Schutzgasschweißbrenners (1) so lange vornehmen, bis die Ausgangsbrückenspannung der Optoelektronischen-Meßbrücke (24) wieder zu Null wird und auf diese Weise, also mit einem zu den numerisch gesteuerten Hauptkoordinatenachsen (35,36,37) z.B. einer Koordinaten-Führungsmaschine überlagerten Hilfskoordinaten-Verstellmechanismen (38,39,40,41) die gegenüber der NC-Sollbahn auftretenden Abweichungen im tatsächlichen Fugenverlauf nach Null hin korrigiert.

8. Verfahren nach Anspruch 7,
dadurch gekennzeichnet, daß z.B. an einer NC-gesteuerten Koordinaten-Führungsmaschine mehr als ein Lichtbogen-Schutzgasschweißbrenner (1) und somit mehr als ein Hilfskoordinaten-Verstellmechanismus (38 bis 41) vorgesehen sein kann, der nach dem gleichen Prinzip Abweichungen zwischen Soll- und Istbahn korrigiert.

9. Verfahren gemäß Anspruch 6,
dadurch gekennzeichnet, daß der Lichtbogen (10) des ersten an einer Koordinaten-Führungsmaschine installierten Schutzgas-Lichtbogen-Schweißbrenners (1) mit Hilfe einer optoelektronischen Einrichtung wie in Anspruch 1 erläutert die automatische Nahtverfolgung (Fugenverlauf) gemäß Anspruch 6 sicherstellt ohne ein zusätzliches Hilfskoordinatensystem gemäß Anspruch 7 zu benötigen.

10. Verfahren nach Anspruch 9,
dadurch gekennzeichnet, daß jeder weitere Schutzgas-Lichtbogenschweißbrenner (1) an einer Koordinaten-Führungsmaschine an einem Hilfskoordinaten-Verstellmechanismus (38 bis 41) mit Drehverstelleinrichtung (44,50) für den Schweißbrenner (1) montiert ist und die Optoelektronische-Einrichtung (3,4) an jedem weiteren Schweißbrenner sowohl die Normalstellung des Schweißbrenners und der Optoelektronischen-Bauelemente (3,4) im Schweißbrenner (1) zur aktuellen Schweißbahn (72)(tatsächlicher Fugenverlauf) sicherstellt, als auch die Beaufschlagung der Hilfskoordinaten-Verstellmechanismen 38 bis 41) so daß die Bewegungsrichtung deren Resultierender in der aktuellen Schweißbahnrichtung (72) jedes weiteren zu verschweißenden Werkstückes liegt und wobei deren theoretische Schweißkontur identisch ist mit derjenigen des ersten Werkstückes (11).

11. Schutzgas-Lichtbogenschweißbrenner,
dadurch gekennzeichnet, daß zur Minderung der Anhaftung von Metallspritzern (64) an der Schutzgaskappe (7) - die Metallspritzer (64) sind verfahrensbedingt - die Schutzgaskappe (7) doppelwandig bis zu ihrer Stirnseite, die dem Schweißlichtbogen (10) zugewandt ist, ausgeführt ist und über eine Kühlflüssigkeit (51) kontinuierlich gekühlt wird.

12. Schutzgas- Lichtbogenschweißbrenner,
dadurch gekennzeichnet, daß zur Minderung der Anhaftung von verfahrensbedingten Metallspritzern (64) an der Stromkontaktdüse (12) dieselbe über einen Rohrzuganker (52) der von der Rückseite (53) des Schweißbrenners (1) aus bedient wird, in den durch eine elektrisch nichtleitende Kühlflüßigkeit (57) indirekt gekühlten metallischen Sitz eines Düsenstockes (2) gezogen wird, wobei durch die Nichtverwendung von Einschraubhilfen für die Kontaktdüse (12) wie z.B. Steckschlüssel, Maulschlüssel usw. die direkt an der Stromkontaktdüse (12) üblicherweise einwirken, Kratzerbildungen an der Oberfläche der Kontaktdüse (12) - das fördert die Metallspritzeranhaftung - vermieden werden und wobei der Rohrzuganker (52) - der die Schweißdrahtzufuhr (43,51) zur Stromkontaktdüse (12) gestattet - verschiebbar und über O-Ringe (54,62) nach außen flüssigkeitsdicht in dem Düsenstock (2) gelagert ist, daß er von der Kühlflüssigkeit (57) umspült wird und daß der so gekühlte und in die Stromkontaktdüse (12) eingeschraubte Rohrzuganker (52) zusätzlich Verfahrenswärme aus der Stromkontaktdüse (12) an die Kühlflüssigkeit (57) ableitet.

13. Schutzgas-Lichtbogenschweißbrenner, dadurch gekennzeichnet, daß zur Vermeidung von Metallspritzeranhaftung am Ende des Ringraumes (8) - gebildet
zwischen Stromkontaktdüse (12) bzw. Düsenstock (2) und
größtem inneren Durchmesser der gekühlten Schutzgaskappe
(7) - ein Prallring (59) auswechselbar im Schutzgas-
Lichtbogenschweißbrenner (1) vorgesehen ist.

14. Schutzgas-Lichtbogenschweißbrenner,
dadurch gekennzeichnet, daß die Optoelektronischen-Bauelemente (3,4) gemäß Anspruch 1 in Metallspritzerflugrichtung
(64) gesehen hinter dem Prallring (59) angeordnet sind.

15. Schutzgas-Lichtbogenschweißbrenner gemäß Anspruch 13,
dadurch gekennzeichnet, daß der Schutzgaseintritt (60)
in den Ringraum (8) entsprechend Beschreibung nach Anspruch
1 immer vor den Optoelektronischen-Bauelementen (3,4)
erfolgt, betrachtet von der Brennerspitze her.

16. Verfahren zur horizontalen Nahtverfolgung beim Schutzgaslichtbogenschweißen gemäß Anspruch 6,
dadurch gekennzeichnet, daß die vorgegebene Sollbahn,
welcher der Schutzgas-Lichtbogenschweißbrenner (SGS) (1)
folgen soll, unmittelbar der Schweißfugenverlauf ist und
daß der SGS (1) exzentrisch drehbar (65,69) in der
Brennerhalterung (55) einer Brenneraufhängung gelagert
ist, welche z.B. die X-Achse (36) einer Koordinaten
Führungsmaschine darstellt und daß der Exzenter (69) und
somit die Mitte des SGS (1) in Schweißrichtung (13)
sich immer vor der Mitte (65) der Drehachse befinden und
damit die Führungsrichtung des Optoelektronischen-Sensors
(3,4) bestimmt wird und daß bei Horizontalablage und
somit Meßbrückenverstimmung ein Drehverstellantrieb (67)
elektronisch so angesteuert wird, daß der SGS (1) von
der jeweiligen horizontalen Ablage zur Mitte Fugenverlauf gedreht wird, wobei synchron ein Komponentenzerleger (68)

(sin-cos-Winkelgeber) mitgedreht wird, welcher die Richtungssignale für die Koordinaten-Antriebe (38 bis 41) der Führungsmaschine vorgibt und somit zwangsläufig den SGS (1) tangential zu dem durch das Werkstück vorgegebenen Schweißfugenverlauf (72) führt.

17. Schutzgas-Lichtbogenschweißbrenner gemäß Anspruch 1, dadurch gekennzeichnet, daß der Prallring (59) lichtdurchlässig ist, und vorzugsweise aus PTFE besteht.

18. Verfahren nach Anspruch 1, dadurch gekennzeichnet, daß Lichtleitelemente z.B. Lichtleitfasern die Lichtintensivität bzw. deren Änderung erfassen und z.B. zu außerhalb des Schweißbrenners (1) angeordneten Optoelektronischen-Bauelemente (3,4) leiten zwecks Auswertung.

TMG 1269
Gr/Ha
4.2.1982

**Fig. 1**

**Fig. 2**

Fig. 3

Fig. 5

Fig. 4

Fig. 6

Fig. 9

Fig. 7

18    18a

(–)

Fig. 8

18    18a

Fig. 10

R
S
T
MP

26
27
28
29  30  31  32

Fig. 11

Fig. 12

Fig. 13

Fig. 14

Fig. 15